# EUROPÄISCHE PATENTSCHRIFT

(11) **EP 2 964 699 B1**
(45) Veröffentlichungstag und Bekanntmachung des Hinweises auf die Patenterteilung: **31.01.2018**
(21) Anmeldenummer: 14714572.6
(22) Anmeldetag: 03.03.2014
(51) Int. Cl.: C08L 21/00, B60C 1/00, C08C 19/00, C08K 3/00, C08K 5/00, C08K 9/02, C08K 3/04

(54) **GUMMIMISCHUNGSZUSAMMENSETZUNG MIT VERRINGERTER INNERER REIBUNG**
RUBBER BLEND COMPOSITION WITH REDUCED INTERNAL FRICTION
COMPOSITION DE MÉLANGE DE CAOUTCHOUC À FROTTEMENT INTERNE RÉDUIT

(30) Priorität: 06.03.2013 AT 501532013
(43) Veröffentlichungstag der Anmeldung: 13.01.2016
(73) Patentinhaber: Karall, Gerhard, 2620 Neunkirchen (AT)
(72) Erfinder: Karall, Gerhard, 2620 Neunkirchen (AT)
(74) Vertreter: Babeluk, Michael
(86) Internationale Anmeldenummer: PCT/AT2014/050049
(87) Internationale Veröffentlichungsnummer: WO 2014/134648

(56) Entgegenhaltungen:
- WO-A1-03/053721
- US-A- 4 166 083
- US-A- 4 203 884
- US-A- 4 427 831
- US-A- 4 530 386
- US-A- 5 145 897
- US-A- 5 312 856
- US-A1- 2009 173 908

## Beschreibung

Die Erfindung bezieht sich auf einen vulkanisierten Gummimischungsaufbau mit verringerter innerer Reibung, insbesondere für Reifen und Transmissionssysteme, wie Riemen, Bänder u. dgl. mit Trans-Polynorbornene in Verbindung mit Prozessölen.

Eine derartige Gummimischung für Reifen mit einem aromatischen Prozessöl ist aus der WO 03/053 721 A1 bekannt. Solche Gummimischungen führen zu Reifenmischungen mit einem hohem Verlustfaktor Tangens Delta bei Gebrauchstemperatur. Ein hoher Verlustfaktor führt zu sehr guten Reibungskoeffizienten und deshalb wurden Reifenmischungen mit aromatischen Prozessölen, wie eben auch die in der WO 03/053721 A1 beispielhaft angeführten Gummimischungsaufbauten in der Vergangenheit für Rennreifenapplikationen eingesetzt.

Ein reibungsverminderndes Material umfassend verschiedene Kunststoffe, darunter auch ein Poly-(alkylen-stat-norbornen) sowie Prozessöle ist aus der EP 1 156 075 A2 bekannt. Aufgrund der geringen Haftreibung, insbesondere bei Nässe, ist ein derartiges Material allerdings nicht für Reifen geeignet.

Reifenlaufflächen auf der Basis von Polydienkautschuk, die ein naphthenisches und oder/oder paraffinisches Öl mit Ruß und/oder einem mineralischen Füllstoff, sowie üblichen Zuschlagstoffen, für einen deutlich verbesserten Rollwiderstand aufweisen, sind aus der EP 0 799 726 A1 bekannt. Des Weiteren wird in dieser Druckschrift erwähnt, dass der Rollwiderstand bei Integralkautschuk beim Austausch der in der Kautschuktechnik üblichen aromatischen Öle durch naphthenische oder paraffinische Öle verbessert wird.

Weitere Gummimischungszusammensetzungen für Reifen auf Basis von Polynorbornenen können beispielsweise der US 5,312,856 A, der US 5,145,897 A der US 4,427,831 A oder der US 4,166,083 A entnommen werden.

Für derzeit am Markt befindliche Reifenlaufflächen werden als Polymerbasis ESBR, S-SBR, Naturkautschuk, Butadienkautschuk und/oder flüssige Formen vorgenannter Kautschuke verwendet. Zur Verbesserung des Rollwiderstandes sind der Polymerbasis aktive Füllstoffe, wie beispielsweise Kieselsäure, mit und ohne Silanisierung beigemischt. Durch spezielle Vulkanisationssysteme werden die Eigenschaften weiter verbessert.

Zudem haben die Reifenbreite, der Luftdruck, sowie die Profilgestaltung maßgebenden Einfluss auf den Rollwiderstand eines Reifens. Im Bereich von Transmissionssystemen finden vergleichbare Mischungsaufbauten, teilweise faserverstärkt, wie für Reifen Verwendung.

Heutzutage besteht ein zunehmender Bedarf an Reifen mit verbesserten Fahrverhalten bei möglichst geringem Rollwiderstand, der im Wesentlichen von Laufflächengummimischung, vom Reifendruck, von der Reifenbreite und vom Laufflächenprofil bestimmt wird.

Ein Reifen soll einen möglichst hohen Reibungskoeffizienten zwischen der Lauffläche und der Straßenoberfläche haben, soll einem geringen Gebrauchsverschleiß unterliegen und dabei einen geringen Rollwiderstand aufweisen.

Der Reibungskoeffizient zwischen der Lauffläche und der Straßenoberfläche steht zum Verlustfaktor (tan delta) der Laufflächengummimischung in Beziehung. Bei bekannten Gummimischungszusammensetzungen gilt der Zusammenhang, dass der Reibungskoeffizient umso größer ist, je größer tan delta ist. Tan delta ist zudem abhängig von der Temperatur und der Abrollgeschwindigkeit. Auch deshalb variiert, neben anderen Einflussfaktoren, das Haftvermögen eines Reifens je nach Umgebungstemperatur und gefahrener Geschwindigkeit.

Der Erfindung liegt somit die Aufgabe zugrunde, eine Gummimischungszusammensetzung zu schaffen, die einen verringerten Rollwiderstand, vornehmlich für die Lauffläche von Reifen, sowie für Transmissionssysteme, wie Transportbändern, Keilriemen, etc. aufweist. Zudem sollen gleichzeitig gute Gebrauchsabriebeigenschaften und ein guter Grip erzielbar sein.

Die Erfindung löst die gestellte Aufgabe durch eine Gummimischungszusammensetzung, bei der das Prozessöl paraffinisches Öl mit einem Glasübergang von< -20° Celsius, vorzugsweise von ≤ -70° Celsius, ist. Eine derartige Zusammensetzung empfiehlt sich für eine Verwendung in unseren Breiten.

Die erfindungsgemäße Gummimischungszusammensetzung weist einen erheblich verringerten Verlustfaktor auf, was für einen daraus gefertigten Reifen einen niedrigeren Rollwiderstand bedeutet, womit der Treibstoffverbrauch reduziert werden kann. Die verringerte innere Reibung bewirkt eine geringere Erwärmung des Reifens im Betrieb und einen verbesserter Wirkungsgrad. Zudem weist die Gummimischungszusammensetzung bessere Abriebeigenschaften, beispielsweise 50 mm³ DIN - Abrieb, gegenüber herkömmlichen Gummimischungen auf. Ein Reibungskoeffizient von 0,8 zwischen Gummimischung und Stahl bei trockenen Verhältnissen ist mit der erfindungsgemäßen Gummimischungszusammensetzung erreichbar, womit eine zu kommerziellen Rennreifen vergleichbare Reifenhaftung erzielbar ist. Die erfindungsgemäße Gummimischungszusammensetzung kann sowohl als Lauffläche, als auch als Flankenmaterial verwendet werden. Die Gummilaufflächenmischung wird auf Basis Trans-Polynorbornene aufgebaut und in herkömmlichen Verarbeitungsverfahren verarbeitet bzw. vulkanisiert.

Eine weitere Anwendung ist der Einsatz in Transmissionssystemen zur Verbesserung des Wirkungsgrades von Riemensystemen.

Als Zusätze bzw. Füllstoffe empfehlen sich insbesondere silanisierte Kieselsäure und Ruß.

Die Gummimischungszusammensetzung umfasst Trans-Polynorbornene in Verbindung mit Prozessölen in einem Verhältnis von 1: 0,1 bis 1: 5, vorzugsweise in einem Verhältnis von 1:1. Zudem kann die Gummimischung für sich alleine oder aber auch zusammen mit herkömmlichen Elastomermischungen, als BLEND oder in Kombination (bei schichtweisem Aufbau) verwendet werden.

### Kurze Beschreibung der Zeichnung

In der Zeichnung ist der Erfindungsgegenstand beispielsweise dargestellt. Es zeigen
Fig. 1 ein Diagramm mit dem Verlustfaktor [tan delta] über der Temperatur für eine Probe aus einer Gummimischung gemäß dem Stand der Technik und
Fig. 2 ein Diagramm mit dem Verlustfaktor [tan delta] über der Temperatur für eine Probe aus einer erfindungsgemäßen Gummimischung.

Die Proben sind quaderförmig mit den Dimensionen 10 x 3,2 x 20,2 mm ausgeführt. Die erfindungsgemäße Probe besteht aus einer erfindungsgemäßen Gummimischungszusammensetzung mit verringerter innerer Reibung, welche ausvulkanisiert wurde und aus Trans-Polynorbornene und einem Prozessöl mit einem Glasübergang von< -70°Celsius und silanisierter Kieselsäure besteht.

Zur Erzielung dieser Vorteile wird das Sonderpolymer Norsorex NS (trans - Polynorbornene der Firma Astrotech) mit Prozessölen mit einer Glasübergangstemperatur kleiner -70°C (paraf. Öl 1998 von H&R) in einem Verhältnis 1:1 kombiniert und die bekannten Techniken, Zugabe silanisierter Kieselsäure und Verwendung optimierter Vulkanisationssysteme angewandt.

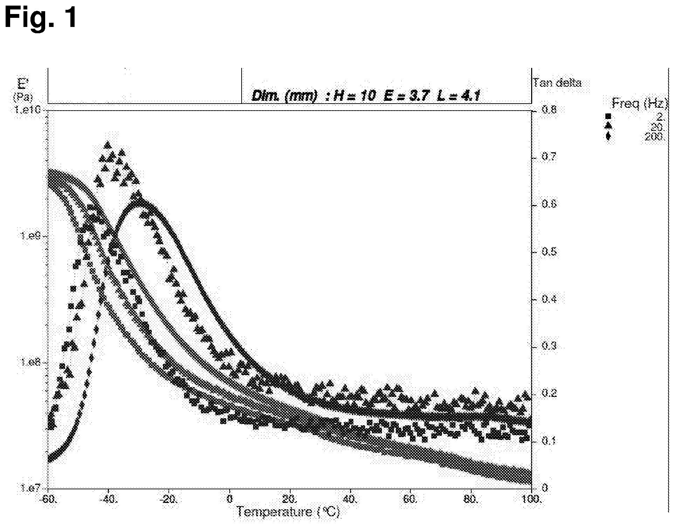

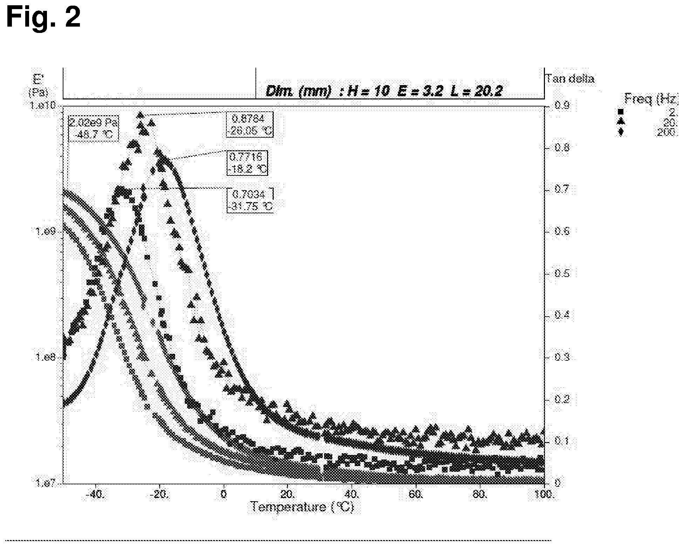

Die in der Zeichnung dargestellte Gummimischungszusammensetzung gemäß Fig. 1, eine herkömmliche Reifenmischung nach dem Stand der Technik, und gemäß Fig. 2, einer erfindungsgemäße gemäß Fig. 1, zeigen im Betriebstemperaturbereich zwischen 20 bis 60°C einen signifikanten Unterschied in der Höhe des Verlustfaktors [tan delta]. Im Besonderen weist bekannte Gummimischungszusammensetzung ein tan delta von 0,12 bis 0,19 und einen DIN-Abrieb von 117 mm³ auf, wohingegen die erfindungsgemäße Gummimischungszusammensetzung ein tan delta von 0,03 bis 0,11 und einen DIN-Abrieb von 51 mm³ aufweist. Die Messung erfolgte in verschiedenen Frequenzen bei 2, 20 und 200 Hz. Der Reibungskoeffizient auf Stahl beträgt bei trockenen Verhältnissen 0,8.

Auf der linken Vertikalachse der Diagramme ist der E-Modul aufgetragen. Er dient zur Beurteilung, wo das Material seinen Glasübergang aufweist und um ca. 3 - Zehnerpotenzen im Modul einbricht bzw. auf welchem Niveau der E-Modul im Gebrauchstemperaturbereich zu liegen kommt.

## Patentansprüche

1. Verwendung einer Gummimischungszusammensetzung für Laufflächen von Reifen oder von Transmissionssystemen, wobei die Gummimischungszusammensetzung Trans-Polynorbornene in Verbindung mit Prozessölen enthält, **dadurch gekennzeichnet, dass** die Gummimischungszusammensetzung als Prozessöl paraffinisches Öl mit einem Glasübergang von <-20° Celsius, vorzugsweise <-70 °C enthält.

2. Verwendung nach Anspruch 1, **dadurch gekennzeichnet, dass** die Gummimischungszusammensetzung silanisierte Kieselsäure als Füllstoff verwendet.

3. Verwendung nach Anspruch 1 oder 2, **dadurch gekennzeichnet, dass** der Gummimischungszusammensetzung Ruß als Füllstoff zugesetzt ist.

4. Verwendung nach einem der Ansprüche 1 bis 3, **dadurch gekennzeichnet, dass** die Gummimischungszusammensetzung vulkanisiert ist.

5. Verwendung nach einem der Ansprüche 1 bis 4, **dadurch gekennzeichnet, dass** das Verhältnis von Trans-Polynorbornene in Verbindung mit Prozessölen in der Gummimischungszusammensetzung 1:0,1 bis 1:5, vorzugsweise 1:1 beträgt.

6. Verwendung nach einem der Ansprüche 1 bis 5, **gekennzeichnet durch** den Zusatz von herkömmlichen Elastomermischungen.

## Claims

1. Use of a rubber blend composition for treads of tires or transmission systems, wherein the rubber blend composition contains trans-polynorbornenes in conjunction with process oils, **characterised in that** the rubber blend composition contains paraffinic oil as process oil having a glass transition of <-20°C, preferably <-70°C.

2. Use according to claim 1, **characterised in that** the rubber blend composition uses silanized silica as filler.

3. Use according to claim 1 or 2, **characterised in that** carbon black is added as filler to the rubber blend composition.

4. Use according to one of the claims 1 to 3, **characterised in that** the rubber blend composition is vulcanized.

5. Use according to one of the claims 1 to 4, **characterised in that** the ratio of trans-polynorbornenes in connection with process oils in the rubber blend composition is 1:0.1 to 1:5, preferably 1:1.

6. Use according to one of the claims 1 to 5, **characterised by** the addition of conventional elastomer mixtures.

## Revendications

1. Utilisation d'une composition de mélange de caoutchouc pour des surfaces de roulement de pneumatiques ou de systèmes de transmission, la composition de mélange de caoutchouc renfermant du trans-polynorbornène en liaison avec des huiles de process,
**caractérisée en ce que**
la composition de mélange de caoutchouc renferme, en tant qu'huile de process, une huile paraffine ayant une température de transition vitreuse < -20° Celsius, de préférence < -70°C.

2. Utilisation conforme à la revendication 1,
**caractérisée en ce que**
la composition de mélange de caoutchouc utilise en tant que charge des acides siliciques silanisés.

3. Utilisation conforme à la revendication 1 ou 2,
**caractérisée en ce que**
du noir de carbone est ajouté à la composition de mélange de caoutchouc en tant que charge.

4. Utilisation conforme à l'une des revendications 1 à 3,
**caractérisée en ce que**
la composition de mélange de caoutchouc est vulcanisée.

5. Utilisation conforme à l'une des revendications 1 à 4,
**caractérisée en ce que**
la proportion de trans-polynorbornène en liaison avec des huiles de process dans la composition de mélange de caoutchouc et égale à 1: 0,1 à 1:5, de préférence à 1:1.

6. Utilisation conforme à l'une des revendications 1 à 5,
**caractérisée par**
l'addition de mélanges élastomères classiques.
